# EUROPEAN PATENT APPLICATION

(11) **EP 3 557 650 A1**
(43) Date of publication of application: **23.10.2019**
(21) Application number: 17879813.8
(22) Date of filing: 15.12.2017
(51) Int. Cl.: H01M 2/10

(54) **BATTERY ASSEMBLY AND ELECTRONIC CIGARETTE WITH SAME**

(30) Priority: 16.12.2016 CN 201621390005 U
(71) Applicant: Changzhou Patent Electronic Technology Co., Ltd, Jiangsu 213022 (CN)
(72) Inventor: QIU, Weihua, Changzhou Jiangsu 213125 (CN)
(74) Representative: Zaboliene, Reda
(86) International application number: PCT/CN2017/116649
(87) International publication number: WO 2018/108171

(57) **Abstract**

Disclosed are a battery assembly (100, 200) and an electronic cigarette with the battery assembly (100, 200). The battery assembly (100, 200) comprises a battery main body (10) and a cover body assembly (30) arranged on the battery main body (10). The battery main body (10) is provided with a mounting groove (101). A side wall of the mounting groove (101) is provided with a clamping portion (102). The battery main body (10) is electrically connected to a switch (201). The cover body assembly (30) comprises a cover body (32) movably arranged in the mounting groove (101), a locking structure (35) arranged on the cover body (32), and an abutting member (322) arranged, corresponding to the switch (201), between the mounting groove (101) and the cover body (32). The locking structure (35) comprises a locking member (351) movably arranged, corresponding to the clamping portion (102), on the cover body (32), and a second elastic member (352) elastically abutting between the cover body (32) and the locking member (351). The locking member (351) and the clamping portion (102) can be disengaged by prodding the locking member (351), and thus the cover body (32) can be pressed, so that the abutting member (322) abuts against and closes the switch (201). By loosening the cover body (32), the cover body (32) can reset, and the locking member (351) resets under the action of the second elastic member (352) and is thus clamped with the clamping portion (102).

## Description

This application claims the priority of Chinese Patent Application No. 201621390005.0, filed on December 16, 2016, entitled "BATTERY ASSEMBLY AND ELECTRONIC CIGARETTE WITH SAME". The contents of the above-identified applications are incorporated herein by reference.

### TECHNICAL FIELD

The present application relates to the technical field of smoking simulation, and more particular, to a battery assembly and an electronic cigarette having the battery assembly.

### BACKGROUND

A battery assembly of an electronic cigarette is configured to provide power for an atomizing head to enable the atomizing head to atomize the tobacco liquid. In use, a cover is directly pressed to enable the contactor of the cover to contact with the contactor of the battery, the circuit is thereby powered on, thus the battery assembly outputs power. When the electronic cigarette is accessible for children, an unintended activation may occur, the switch of the battery may be pressed for a long time or be pressed continually, leading to a dry burning to the atomizing core of the atomizing head, the atomizing core is thereby damaged, or the battery itself is damaged, and a service life of the electronic cigarette is seriously affected. More likely, smoking utilizing the electric cigarette by children may occur, there is a potential safety hazard.

### SUMMARY

Accordingly, it is necessary to provide a battery assembly and an electronic cigarette having the battery assembly, to avoid unintended activating or smoking the electronic cigarette by children.

The technical solution adopted by the present application to solve the problem is as follows.

A battery assembly includes a battery main body and a cover assembly arranged on the battery main body. The battery main body is provided with a mounting groove. A sidewall of the mounting groove is provided with a locking portion. A switch is electrically connected to the battery main body. The cover assembly includes a cover movably arranged in the mounting groove, a locking structure arranged on the cover, and an abutting member arranged, corresponding to the switch, between the mounting groove and the cover. The locking structure includes a locking member movably arranged on the cover corresponding to the locking portion, and a second elastic member elastically abutting between the cover and the locking member. When the locking member is prodded to cause the locking member to unlock from the locking portion, the cover is capable of being pressed to cause the abutting member to resist the switch to be closed. When the cover is released, the cover resets, and the locking member resets under the action of the second elastic member to be locked with the locking portion.

Further, one end of the abutting member away from the battery main body is fixedly connected to the cover. The cover assembly further includes a first elastic member elastically provided between the battery main body and the cover. When the cover is pressed, the cover compresses the first elastic member and drives the abutting member to move, causing the abutting member to resist the switch. When the cover is released, the cover resets under the action of the first elastic member and drives the abutting member to move, causing the abutting member to separate from the switch.

Further, one end of the abutting member elastically abuts the switch, and the other end of the abutting member elastically abuts the cover. When the cover is pressed, the abutting member is deformed to resist the switch to be closed. When the cover is released, the abutting member resets to cause the switch to be opened.

Further, the cover is provided with a positioning groove corresponding to the locking portion. The locking member is movably positioned in the positioning groove. One end of the second elastic member elastically abuts a bottom wall of the positioning groove away from the locking portion, the other end of the second elastic member elastically abuts the locking member.

Further, the locking structure further includes a restricting member. The restricting member is fixedly connected to a sidewall of the positioning groove adjacent to the battery main body. The locking member is provided with a restricting portion. The restricting member resists on one side of the restricting portion adjacent to the locking portion.

Further, the locking member is provided with an engaging portion corresponding to and engageable with the locking portion. The engaging portion is engaged with the locking portion under the action of the second elastic member.

Further, the cover assembly further includes an inner lining member fixedly mounted in the mounting groove and a connecting member provided between the inner lining member and the cover. The inner lining member is positioned at a side of the cover adjacent to the battery main body. The cover is connected to the inner lining member by the connecting member.

Further, the inner lining member is provided with a restricting hole. The cover is provided with a connecting hole corresponding to the restricting hole. One end of the connecting member extends outwardly from a periphery of the connecting member to form an abutting portion which is capable of being engaged in the restricting hole. After the connecting member extends through the restricting hole, the abutting portion is engaged in the restricting hole. The other end of the connecting member opposite to the abutting portion is fixedly connected to the cover.

Further, the inner lining member is provided with a through hole. The through hole corresponds to the switch. The abutting member extends through the through hole to resist the switch.

An electronic cigarette includes the aforementioned battery assembly.

The advantageous effects of the present application are as follows:
In the battery assembly or the electronic cigarette of the present application, by providing the locking structure, it is required to prod the locking member firstly, to unlock the cover before pressing the cover. Further, after the battery assembly is used, the cover is released, and the cover can reset automatically to be locked again by the locking structure. Thus, unintended activating or smoking the electronic cigarette by children is avoided, thereby having a certain children protection function.

### BRIEF DESCRIPTION OF THE DRAWINGS

The present application will now be further described with reference to the accompanying drawings and embodiments.
FIG. 1 is a structural schematic view of a cover assembly according to a first embodiment of the present application.
FIG. 2 is an exploded view of the cover assembly of FIG. 1;
FIG. 3 is a structural schematic view of a cover of the cover assembly of FIG. 2, as viewed from another aspect;
FIG. 4 is a structural schematic view of a locking member of the cover assembly of FIG. 2;
FIG. 5 is a structural schematic view of the locking member of FIG. 2, as viewed from another aspect;
FIG. 6 is a structural schematic view of a battery assembly incorporated with the cover assembly of FIG. 1 of the present application (the cover is locked);
FIG. 7 is a structural schematic view of the battery assembly of FIG. 6 in another state (the cover is unlocked);
FIG. 8 is a structural schematic view of the battery assembly of FIG. 6 in another state (the cover is pressed); and
FIG. 9 is a structural schematic view of a battery assembly according to a second embodiment of the present application (the cover is locked).

The part names and their reference signs in the figures are:

| | | |
|---|---|---|
| battery assembly 100, 200 | battery main body 10 | control board 20 |
| cover assembly 30 | inner lining member 31 | cover 32 |
| connecting member 33 | first elastic member 34 | locking structure 35 |
| mounting groove 101 | locking portion 102 | switch 201 |
| restricting hole 311 | through hole 312 | connecting hole 321 |
| abutting member 322 | positioning groove 323 | locking member 351 |
| second elastic member 352 | restricting member 353 | engaging portion 3511 |
| positioning post 3512 | restricting portion 3513 | prodding portion 3514 |
| fastener 313 | protrusion 314 | cutout 324 |
| indentation 3515 | abutting portion 331 | first flat surface 3221 |
| second flat surface 3222 | | |

### DETAILED DESCRIPTION OF EMBODIMENTS

The present application will now be described in detail in conjunction with the drawings. These drawings are simplified schematic diagrams illustrating the basic structure of the present application only in a schematic manner, and thus they show only the configuration related to the present application.

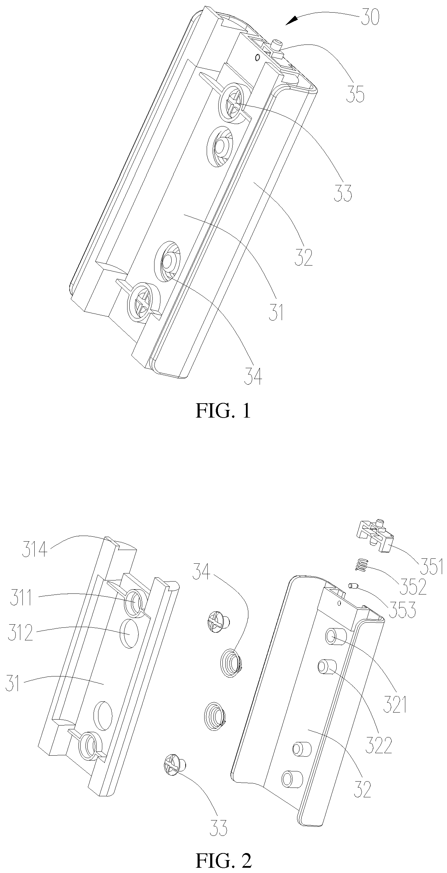

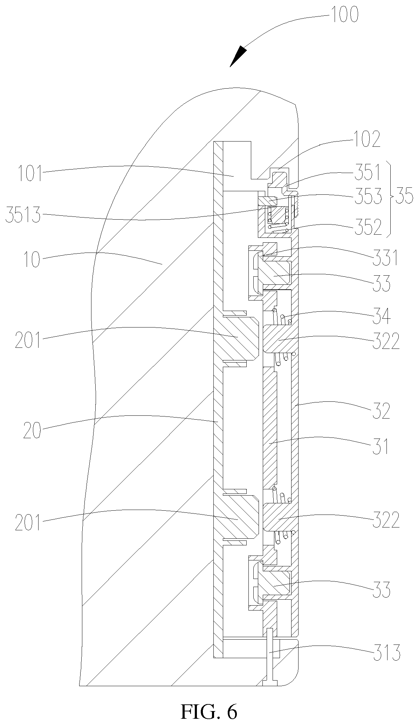

Referring to FIG. 1 and FIG.6, a battery assembly 100 configured for an electronic cigarette is provided by the present application. The battery assembly 100 includes a battery main body 10, and a control board 20 and a cover assembly 30 both of which are mounted on the battery main body 10. In the embodiment, it is specified that, a direction away from an axial direction of the battery main body 10 is defined as an outward direction.

The battery main body 10 is provided with a mounting groove 101, a sidewall of the mounting groove 101 is provided with a locking portion 102. In the embodiment, the locking portion 102 is a locking groove defined in the sidewall of the mounting groove 101.

The control board 20 is fixedly mounted on the bottom wall of the mounting groove 101. The control board 20 is provided with a pair of switches 201 electrically connected to the battery main body 10. In the embodiment, the switch 201 is an elastic switch. When the switch 201 is pressed to be closed, the battery main body 10 supplies power externally.

The cover assembly 30 includes an inner lining member 31, a cover 32, a connecting member 33, a first elastic member 34, and a locking structure 35.

Referring to FIG. 2 and FIG. 6, the inner lining member 31 is fixedly mounted in the mounting groove 101 of the battery main body 10. It can be understood that, the inner lining member 31 may be fixedly mounted to the battery main body 10 through threaded connection, adhering connection or clamping connection. In the embodiment, the inner lining member 31 is provided with a threaded hole at the end opposite to the locking portion 102. The inner lining member 31 is fixedly mounted to the battery main body 10 through fasteners such as screw or bolt. In the embodiment, in order to prevent the end of the inner lining member 31 opposite to the threaded hole disengaging from the mounting groove 101, the end of the inner lining member 31 opposite to the threaded hole is provided with a protrusion 314. In assembly, the protrusion 314 is firstly engaged in the mounting groove 101, and the end of the inner lining member 31 with the threaded hole is then fixedly mounted to the battery main body 10 through fasteners such as screw or bolt, thereby the inner lining member 31 is stably mounted.

Referring to FIG. 2, the inner lining member 31 substantially has a planar shape, the inner lining member 31 is provided with a pair of restricting holes 311 and a pair of through holes 312. The pair of restricting holes 311 are positioned on opposite ends of the inner lining member 31. One through hole 312 is positioned adjacent to one restricting hole 311, the other through hole 312 is positioned adjacent to the other restricting hole 311. Each through hole 312 corresponds to one switch 201.

The cover 32 is assembled to the inner lining member 31 and positioned outside the inner lining member 31. The cover 32 is provided with a pair of connecting holes 321 corresponding to the pair of restricting holes 311. A pair of abutting members 322 corresponding to the pair of through holes 312 are fixedly connected with the cover 32. Each abutting member 322 corresponds to a through hole 312. The cover 32 is movable toward or away from the inner lining member 31. When the cover 32 is pressed to move toward the inner lining member 31, the abutting member 322 is driven to resist the switch 201, causing the switch 201 to be in a closed state. In the embodiment, the abutting member 322 is formed by protruding inwardly from the cover 32.

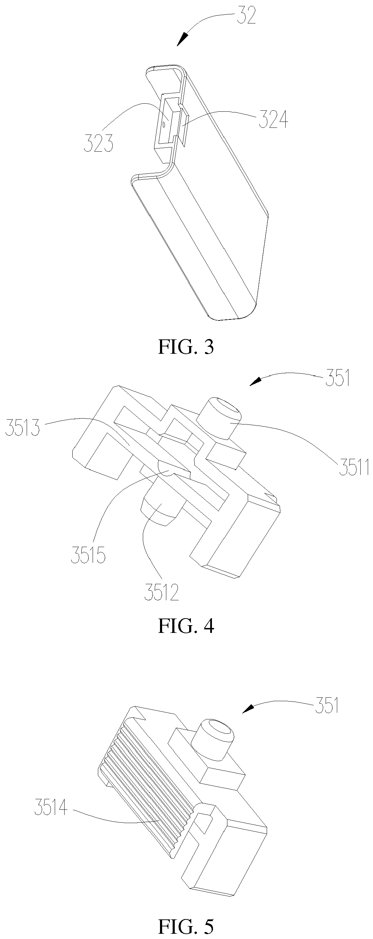

Further, referring to FIG. 3, the cover 32 is provided with a positioning groove 323 corresponding to the locking portion 102.

In order to clearly describe a connection relationship of the connecting member 33, it is specified that, the end of the connecting member 33 away from the battery main body 10 is defined as the outer end, and the end of the connecting member 33 opposite to the outer end is defined as the inner end. Referring to FIG. 6, the inner end of the connecting member 33 extends outwardly from a periphery of the connecting member 33 to form an abutting portion 331 which is capable of being engaged in the restricting hole 311. After the connecting member 33 extends through the restricting hole 311, the abutting portion 331 is engaged in the restricting hole 311. The outer end of the connecting member 33 is fixedly connected to the connecting hole 321. Further, a diameter of the restricting hole 311 is greater than an outer diameter of the connecting member 33, enabling the connecting member 33 to move with the cover 32 when the cover 32 is pressed. In the embodiment, the connecting member 33 is a screw. A larger end of the screw is the abutting portion 331, a smaller end of the screw is threaded to the cover 32. Therefore, by providing the connecting member 33, the cover 32 is connected to the inner lining member 31.

The first elastic member 34 is provided between the inner lining member 31 and the cover 32, one end of the first elastic member 34 elastically abuts the inner lining member 31, the other end of the first elastic member 34 elastically abuts the cover 32. In a natural state, the cover 32 is positioned away from the inner lining member 31 under the elastic force provided by the first elastic member 34, and at this time, the switch 201 is separated from the abutting member 322.

In the embodiment, the first elastic member 34 is a spring, and a quantity of the first elastic member 34 is two. Each elastic member 34 is sleeved on a corresponding abutting member 322. The abutting member 322 can provide a restricting function for the first elastic member 34, guaranteeing the first elastic member 34 to be abutted between the inner lining member 31 and the cover 32.

The locking structure 35 includes a locking member 351, a second elastic member 352, and a restricting member 353.

Referring to FIG. 4 and FIG. 5, the locking member 351 is movably positioned in the positioning groove 323 of the cover 32. One end of the second elastic member 352 elastically abuts a bottom wall of the positioning groove 323, and the other end of the second elastic member 352 elastically abuts a lower end of the locking member 351. An upper end of the locking member 351 is provided with an engaging portion 3511 corresponding to the locking portion 102. In a natural state, the upper end of the engaging portion 3511 is engaged in the locking portion 102 under the elastic force exerted on the locking member 351 by the second elastic member 352, and the lower end of the locking member 351 is positioned in the positioning groove 323. When the locking member 351 is prodded downward, the second elastic member 352 is compressed, and the engaging portion 3511 is disengaged from the locking portion 102. In the embodiment, the engaging portion 3511 is a protrusion.

It can be understood that, in an alternative embodiment not shown, the engaging portion 3511 can be omitted. At this case, the upper end of the locking member 351 can be engaged with the locking portion 102. In a natural state of the second elastic member 352, the upper end of the locking member 351 engages with the locking portion 102.

Further, in order to prod the locking member 351 more easily, a prodding portion 3514 extends outwardly from an outer side edge of the locking member 351 and protrudes out of the cover 32. The cover 32 defines a cutout 324 corresponding to the prodding portion 3514. When the prodding portion 3514 of the locking member 351 is prodded downward along the cutout 324, the locking member 351 is driven to compress the second elastic member 352.

In the embodiment, a positioning post 3512 is provided at the lower end of the locking member 351, the second elastic member 352 is a spring, and the second elastic member 352 is sleeved on the positioning post 3512, for providing a restricting function.

It can be understood that, the first elastic member 34 and the second elastic member 352 can also be other members having rigidity and elasticity, such as thin steel sheets.

The restricting member 353 is fixedly mounted on a sidewall of the positioning groove 323 of the cover 32 adjacent to the battery main body 10. Referring to FIG. 4, the locking member 351 is further provided with a restricting portion 3513, the restricting member 353 can resist on one side of the restricting portion 3513 adjacent to the locking portion 102, thereby avoiding a disengagement of the locking member 351 from the positioning groove 323. In the embodiment, the restricting member 353 is a pin, the restricting portion 3513 is a plate substantially located at a middle of the locking member 351. In the embodiment, in order to facilitate the restricting member 353 to resist the restricting portion 3513, the restricting portion 3513 defines an indentation 3515 matching with the restricting member 353. Meanwhile, when the prodding portion 3514 is prodded downward, the upper end of the locking member 351 adjacent to the locking portion 102 can resist the restricting member 353 for preventing a disengagement.

An operation procedure of the battery assembly 100 of the present application is specifically described with reference to the accompanying drawings.

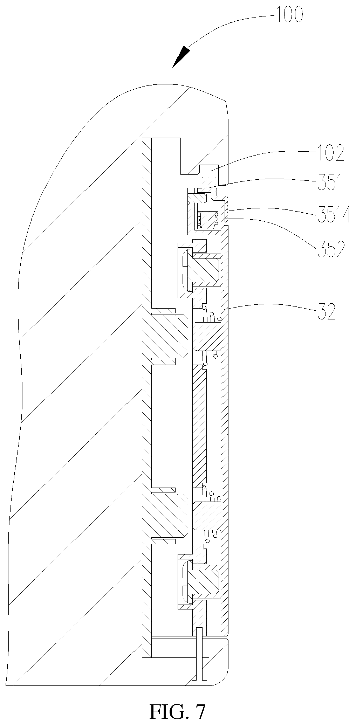

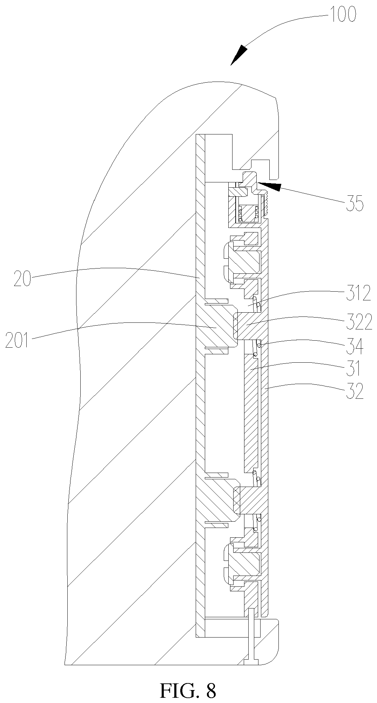

Referring to FIG. 7, when the user wants the battery assembly 100 to provide power externally, the prodding portion 3514 is firstly prodded downward, causing the prodding portion 3514 to drive the locking member 351 to move downwardly and compress the second elastic member 352, until the engaging portion 3511 at the upper end of the locking member 351 disengages from the locking portion 102 of the battery main body 10, and thus the cover 32 is unlocked. Referring to FIG. 8, the cover 32 is then pressed inwardly, the cover 32 with the locking structure 35 moves toward the inner lining member 31 to compress the first elastic member 34, until the abutting member 322 of the cover 32 extends through the through hole 312 of the inner lining member 31 to resist the switch 201 of the control board 20, causing the switch 201 to be closed. At this moment, the circuit is switched on. The atomizing core starts to work and atomizes the tobacco liquid to generate smoke.

When the user does not want the battery assembly 100 to provide power externally, the cover 32 is released, the cover 32 with the locking structure 35 resets and moves outwardly under the action of the first elastic member 34. The abutting member 322 gradually moves away and is finally separated from the switch 201. When the cover 32 moves to a position in which the engaging portion 3511 of the locking member 351 is aligned with the locking portion 102 of the battery main body 10, the locking member 351 with the engaging portion 3511 moves upward under the action of the second elastic member 352, causing the engaging portion 3511 to engage with the locking portion 102, such that the cover 32 is locked and cannot be pressed toward the inner lining member 31. That is, the cover 32 returns again to the state as shown in FIG. 1.

It can be understood that, in an alternative embodiment not shown, the inner lining member 31 and the connecting member 33 both can be omitted. At this case, one end of the first elastic member 34 is fixedly connected to the control board 20, and the other end of the first elastic member 34 is fixedly connected to the cover 32, the switch 201 corresponding to the abutting member 322 is provided on the control board 20 and electrically connected to the battery main body 10. As such, the cover 32 can also be pressed and released, and the cover 32 is kept from falling off. The structure is simpler and easier to manufacture.

It can be understood that, the switch 201 and the abutting member 322 each can be only one.

In the battery assembly 100 of the present application, by providing the locking structure 35, it is required to prod the locking member 351 firstly, to unlock the cover 32 before pressing the cover 32. Further, after the battery assembly 100 is used, the cover 32 is released, and the cover 32 can reset automatically to be locked again by the locking structure 35. Thus, unintended activating or smoking the electronic cigarette by children is avoided, thereby having a certain children protection function.

The present application further provides an electronic cigarette. Since the electronic cigarette has all the technical features of the aforementioned battery assembly 100, the electronic cigarette has the same technical effects as the aforementioned battery assembly 100.

### Second embodiment

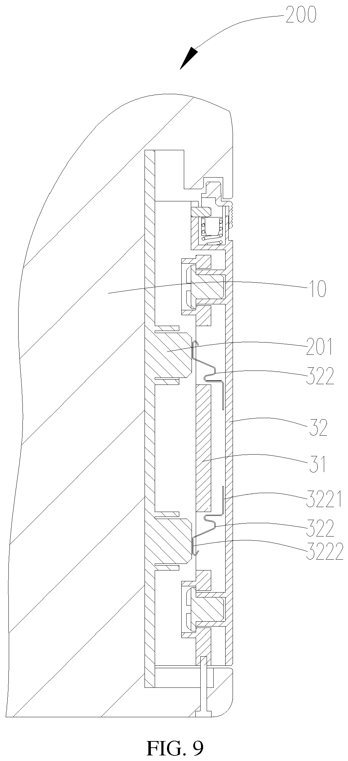

Referring to FIG. 9, compared to the battery assembly 100 of the first embodiment, the battery assembly 200 in the second embodiment is different in that, the first elastic member 34 is omitted, and meanwhile, the abutting member 322 is a member having elasticity and rigidity. One end of the abutting member 322 elastically abuts the switch 201, and the other end of the abutting member 322 elastically abuts the cover 32. In order to prevent the abutting member 322 from falling off from the switch 201 and the cover 32, and to avoid affecting the normal function of the abutting member 322 abutting against the switch 201 and the cover 32, in the embodiment, one end of the abutting member 322 is fixedly connected to the cover 32.

In the embodiment, the abutting member 322 is a thin steel sheet having a cross-section with a curved shape, one end of the abutting member 322 elastically abutting the cover 32 is provided with a first flat surface 3221, and the first flat surface 3221 is fixedly connected to the cover 32. The other end of the abutting member 322 elastically abutting the switch 201 is provided with a second flat surface 3222, and the second flat surface 3222 contacts with the switch 201. By surface to surface contact, the stability of connection is improved, for facilitating the abutting member 322 to work stably.

Specifically, when the cover 32 is not pressed, i.e., the abutting member 322 is in a natural state, although the abutting member 322 contacts with the switch 201, the elastic force of the abutting member 322 is not enough to drive the switch 201 to be closed, and the battery main body 10 does not supply power externally. When the cover 32 is pressed, a deformation of the abutting member 322 gradually increases, so that an elastic force of the abutting member 322 gradually increases, until the abutting member 322 resists the switch 201 to be closed, and the battery main body 10 supplies power externally. When the cover 32 is released, the cover 32 resets under the elastic force of the abutting member 322, causing the switch 201 to be opened.

In the battery assembly 200 of the second embodiment, the first elastic member 34 is omitted, the abutting member 322 not only provides an action to close the switch 201, but also provides an action to reset the cover 32. It has a simpler structure, being easy to manufacture.

Inspired by the above embodiments of the present application, the relevant persons can make various changes and modifications without deviating from the scope of the present application. The scope of the present application is not limited to the contents of the specification, and its scope must be determined according to the appended claims.

## Claims

1. A battery assembly comprising a battery main body and a cover assembly arranged on the battery main body, wherein the battery main body is provided with a mounting groove, a sidewall of the mounting groove is provided with a locking portion, a switch is electrically connected to the battery main body, the cover assembly comprises a cover movably arranged in the mounting groove, a locking structure arranged on the cover, and an abutting member arranged, corresponding to the switch, between the mounting groove and the cover, the locking structure comprises a locking member movably arranged on the cover corresponding to the locking portion, and a second elastic member elastically abutting between the cover and the locking member; when the locking member is prodded to cause the locking member to unlock from the locking portion, the cover is capable of being pressed to cause the abutting member to resist the switch to be closed; when the cover is released, the cover resets, and the locking member resets under the action of the second elastic member to be locked with the locking portion.

2. The battery assembly according to claim **1,** wherein one end of the abutting member away from the battery main body is fixedly connected to the cover, the cover assembly further comprises a first elastic member elastically provided between the battery main body and the cover; when the cover is pressed, the cover compresses the first elastic member and drives the abutting member to move, causing the abutting member to resist the switch; when the cover is released, the cover resets under the action of the first elastic member and drives the abutting member to move, causing the abutting member to separate from the switch.

3. The battery assembly according to claim **1,** wherein one end of the abutting member elastically abuts the switch, and the other end of the abutting member elastically abuts the cover; when the cover is pressed, the abutting member is deformed to resist the switch to be closed; when the cover is released, the abutting member resets to cause the switch to be opened.

4. The battery assembly according to claim **2** or **3,** wherein the cover is provided with a positioning groove corresponding to the locking portion, the locking member is movably positioned in the positioning groove, one end of the second elastic member elastically abuts a bottom wall of the positioning groove away from the locking portion, the other end of the second elastic member elastically abuts the locking member.

5. The battery assembly according to claim **4,** wherein the locking structure further comprises a restricting member, the restricting member is fixedly connected to a sidewall of the positioning groove adjacent to the battery main body, the locking member is provided with a restricting portion, the restricting member resists on one side of the restricting portion adjacent to the locking portion.

6. The battery assembly according to claim **1,** wherein the locking member is provided with an engaging portion corresponding to and engageable with the locking portion, the engaging portion is engaged with the locking portion under the action of the second elastic member.

7. The battery assembly according to claim **4,** wherein the cover assembly further comprises an inner lining member fixedly mounted in the mounting groove and a connecting member provided between the inner lining member and the cover, the inner lining member is positioned at a side of the cover adjacent to the battery main body, the cover is connected to the inner lining member by the connecting member.

8. The battery assembly according to claim **7,** wherein the inner lining member is provided with a restricting hole, the cover is provided with a connecting hole corresponding to the restricting hole, one end of the connecting member extends outwardly from a periphery of the connecting member to form an abutting portion which is capable of being engaged in the restricting hole, after the connecting member extends through the restricting hole, the abutting portion is engaged in the restricting hole, the other end of the connecting member opposite to the abutting portion is fixedly connected to the cover.

9. The battery assembly according to claim **8,** wherein the inner lining member is provided with a through hole, the through hole corresponds to the switch, the abutting member extends through the through hole to resist the switch.

10. An electronic cigarette comprising the battery assembly according to either one of claims 1 to **9.**
